# EUROPEAN PATENT SPECIFICATION

(11) **EP 1 270 295 B1**
(45) Date of publication and mention of the grant of the patent: **24.03.2004**
(21) Application number: 02011434.4
(22) Date of filing: 24.05.2002
(51) Int. Cl.: B60J 1/18, B60J 5/10

(54) **Rear window for the back door or hatchback door of motor vehicles**
Fenster für die Hecktüre oder -klappe eines Fahrzeuges
Fenêtre pour porte ou hayon arrière de véhicule

(30) Priority: 22.06.2001 IT TO20010102
(43) Date of publication of application: 02.01.2003
(73) Proprietor: FIAT AUTO S.p.A., 10135 Torino (IT)
(72) Inventor: Gervasi, Francesco, 10141 Torino (IT)
(74) Representative: Di Francesco, Gianni

(56) References cited:
- DE-A- 2 615 522
- DE-A- 19 615 540
- US-A- 4 886 312
- US-A- 6 131 989
- PATENT ABSTRACTS OF JAPAN vol. 014, no. 331 (M-0999), 17 July 1990 (1990-07-17) & JP 02 114017 A (MAZDA MOTOR CORP), 26 April 1990 (1990-04-26)

## Description

The present invention refers to the back door or the hatchback door of a motor vehicle, according to the preamble of claim 1, equipped with a rear window. A door of this kind is disclosed in US4886312.

Current family cars, minivan or hatchback, present a back door or a hatchback door which are not very practical when it is necessary to put small parcels into the baggage compartment and the car is parked in a city parking. The user is obliged to open the whole back door or hatchback door, but sometimes this is not possible because of the presence of another car being parked too close to the first one. This forces the user to place the parcel on the car seats by making it pass through the side doors.

Different vehicles, or more precisely all-terrain vehicles are known, which present a hatchback door made of two turn-tilt parts, being one of them hinged to the lower part and the other one to the upper part of the opening of the hatchback door. Of the two parts, the one, namely the lower one, is made of sheet metal while the other, namely the upper one, is made of glass, the locker and the hinges being fixed directly on it by means of some bonding agent or by means of through holes with bolts.

On the one hand, this arrangement allows to lift only the glass part when parcel are to be placed into the baggage compartment, and on the other hand forces to realise two manoeuvres to completely open the back door. Besides, the glass part has no support frame and so the designer has to use glass of considerable thickness which both increases costs and, what is worse, makes the vehicle become heavier. Another arrangement presented in the US 4886312 discloses a rear body structure were the lover half part of the rear windshield glass is fixedly connected to a trunk lid which is hingedly connected to the rear pillars for opening or closing a trunk room. This arrangement offers only one way to access to the trunk room.

It is an object of the present invention to find a solution to said drawbacks.

Said object is achieved by means of a rear window for the back door or hatchback door of a motor vehicle presenting the characteristics set forth in claim 1.

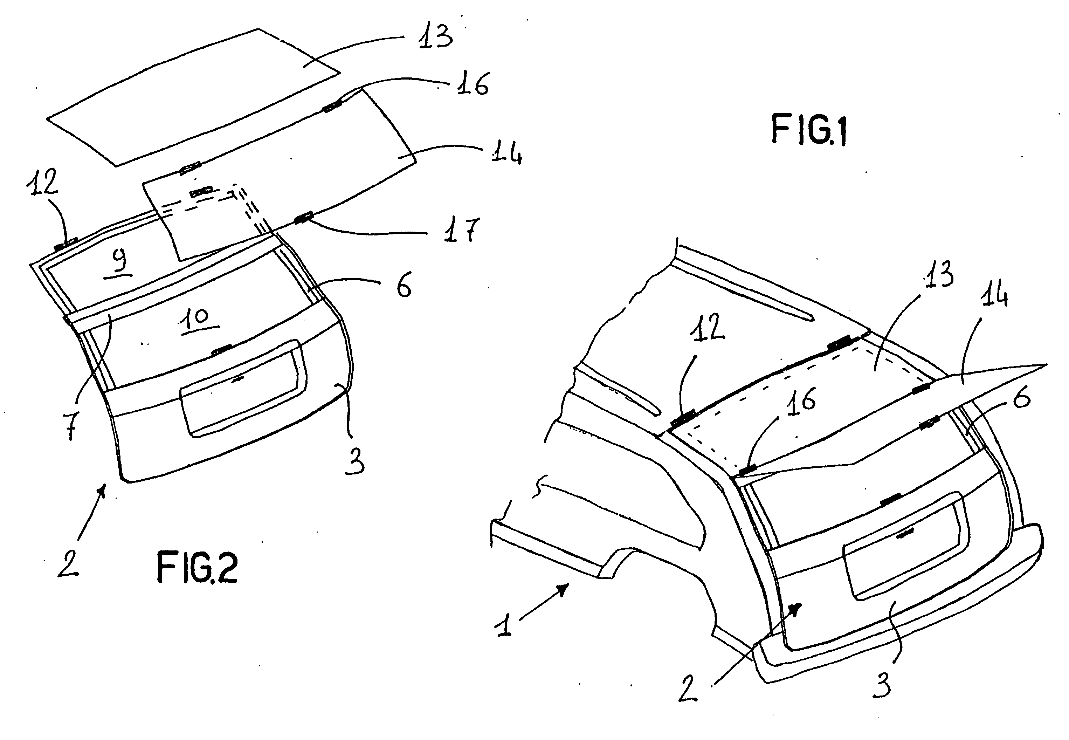

Additional characteristics and advantages of the present invention will become clear from the following description referring to the appended drawings, provided as non restrictive example and in which:
- figure I is a perspective view of the rear part of the bodywork of a motor vehicle with a hatchback door provided with the rear window of the invention, and
- figure 2 is an exploded view of the hatchback door offigure 1.

With reference to the figures, reference number I indicates the rear part of the bodywork of a motor vehicle provided with a hatchback door 2. Said hatchback door presents a lower solid part 3 made of a metal sheet, provided with an element adapted to house the plate of the vehicle. The upper part of the hatchback door of the motor vehicle consists of a peripheral frame 6 presenting horizontally a reinforcing crosspiece 7 which divides the upper part of the door itself into two parts, the upper one 9 and the lower one 10. The upper part 9 presents at its upper edge the hinges 12 adapted to rotatably connect the hatchback door to the bodywork of the motor-vehicle. Said upper part 9 is closed by a glass sheet or a crystal sheet 13 of the type adapted to be mounted on motor vehicles, which is fixed to the frame 6 by means of gluing which can be done directly on the metal or placing a weather tight gasket.

The lower part 10 of the upper part of the door is also closed by a glass sheet or a crystal sheet 14, which is not fixed and instead can be opened simply rotating it on hinges 16 fixed to the crosspiece 7. A lock 17 allows to lock the glass in the closed position, while air springs (not shown) allow to keep the glass lifted if necessary. It is obvious that either the glass 14 or the frame 6, or both of them, will present adequate gaskets to prevent rain, dust, or any other element from entering into the motor vehicle.

Thanks to the invention described above, it is possible to simply lift the glass sheet 14 of the lower part of the upper part of the door and place small parcels inside the baggage compartment, as well as to take them out from it, without having to open the hatchback door completely.

## Claims

1. Back door or hatchback door (1) for motor-vehicles, consisting of an openable door with its lower solid part (3) made of a metal sheet and its upper part (9, 10) consisting of a peripheral frame (6) closed by a glass sheet or crystal sheet (13, 14), **characterised in that** said upper part of the door (9, 10) consisting of a peripheral frame (6) and a glass or crystal sheet (13, 14) is itself horizontally divided into two parts namely an upper part (9) and a lower part (10) each with a corresponding part of the sheet (13, 14), and **in that** the upper part (13) of the glass or crystal sheet is integral with the peripheral frame (6) while the lower part (14) of the glass or crystal sheet can rotate in respect to said upper part (13) of the glass or crystal sheet and of said peripheral frame (6).

2. Back door or hatchback door as claimed in claim 1 **characterised in that** the lower part (14) of said glass or crystal sheet is provided with hinges that rotatably connect it to a horizontal crosspiece (7) which divides the frame (6) into two half parts.

3. Back door or hatchback door as claimed in claim 1 **characterised in that** the lower part (14) of said glass or crystal sheet is provided with air springs adapted to lift it.

## Patentansprüche

1. Hecktüre oder Heckklappe (1) für Motorfahrzeuge, bestehend aus einer zu öffnenden Türe , deren unteres massives Teil (3) aus einem Metallblech besteht und dessen oberes Teil (9, 10) aus einem Umfangsrahmen (6) besteht, der durch eine Glasscheibe oder Kristallscheibe (13, 14) geschlossen ist, **dadurch gekennzeichnet, dass** das obere Teil der Türe (9, 10), das aus einem Umfangsrahmen (6) und einer Glas- oder Kristallscheibe (13, 14) besteht, selbst horizontal in zwei Abschnitte geteilt ist, nämlich einen oberen Abschnitt (9) und einen unteren Abschnitt (10), die jeweils einen entsprechenden Teil der Scheibe (13, 14) enthalten, und dass das obere Teil (13) der Glas- oder Kristallscheibe mit dem Umfangsrahmen (6) einstückig ausgebildet ist, während das untere Teil (14) der Glas- oder Kristallscheibe in Bezug auf das obere Teil (13) der Glas- oder Kristallscheibe und des Umfangsrahmens (6) drehen kann.

2. Hecktüre oder Heckklappe nach Anspruch 1, **dadurch gekennzeichnet, dass** das untere Teil (14) der Glasoder Kristallscheibe mit Gelenken versehen ist, die es drehbar mit einem horizontalen Querträger (7) verbinden, der den Rahmen (6) in zwei Hälften teilt.

3. Hecktüre oder Heckklappe nach Anspruch 1, **dadurch gekennzeichnet, dass** das untere Teil (14) der Glasoder Kristallscheibe mit Luftfedern versehen ist, die dazu ausgebildet sind, es anzuheben.

## Revendications

1. Porte arrière ou hayon arrière (1) pour véhicules à moteur, consistant en une porte qui peut être ouverte et inclut une partie massive inférieure (3) en tôle métallique et une partie supérieure (9, 10) consistant en un cadre périphérique (6) fermé par une vitre de verre ou une vitre de cristal (13, 14), **caractérisé en ce que** ladite partie supérieure de la porte (9, 10) qui consiste en un cadre périphérique (6) et la vitre de verre ou de cristal (13, 14) est divisée horizontalement en deux parties, à savoir une partie supérieure (9) et une partie inférieure (10) qui incluent chacune une partie correspondante de la vitre (13, 14), et **en ce que** la partie supérieure (13) de la vitre de verre ou de cristal est d'un seul tenant avec le cadre périphérique (6), tandis que la partie inférieure (14) de la vitre de verre ou de cristal peut tourner par rapport à ladite partie supérieure (13) de la vitre de verre ou de cristal et audit cadre périphérique (6).

2. Porte arrière ou hayon arrière selon la revendication 1, **caractérisé en ce que** la partie inférieure (14)) de ladite vitre de verre ou de cristal comporte des charnières qui la relient de façon articulée à une traverse horizontale (7) qui divise le cadre (6) en deux moitiés.

3. Porte arrière ou hayon arrière selon la revendication 1, **caractérisé en ce que** la partie inférieure (14) de ladite vitre de verre ou de cristal comporte des ressorts pneumatiques aptes à la soulever.
